Europäisches Patentamt

European Patent Office

Office européen des brevets

(19)

(11) Veröffentlichungsnummer: **0 212 163**
**B1**

(12) **EUROPÄISCHE PATENTSCHRIFT**

(45) Veröffentlichungstag der Patentschrift:
27.09.89

(51) Int. Cl.⁴: **F 16 D 41/06**

(21) Anmeldenummer: 86108971.2

(22) Anmeldetag: 02.07.86

(54) **Freilaufkäfig aus polymerem Werkstoff.**

(30) Priorität: 01.08.85 DE 3527598

(43) Veröffentlichungstag der Anmeldung:
04.03.87 Patentblatt 87/10

(45) Bekanntmachung des Hinweises auf die Patenterteilung:
27.09.89 Patentblatt 89/39

(84) Benannte Vertragsstaaten:
DE FR GB IT

(56) Entgegenhaltungen:
DE-A- 1 625 744
DE-B- 1 264 886
GB-A- 2 110 776
GB-A- 2 162 257
US-A- 3 937 312

(73) Patentinhaber: INA Wälzlager Schaeffler KG,
Industriestrasse 1-3 Postfach 1220,
D-8522 Herzogenaurach (DE)

(72) Erfinder: Rabe, Jürgen, Dipl.-Ing., Talblick 6,
D-8521 Aurachtal (DE)

(74) Vertreter: Klug, Horst, Dipl.-Ing. (FH), c/o INA Wälzlager
Schaeffler KG Postfach 12 20, D-8522 Herzogenaurach
(DE)

ACTORUM AG

## Beschreibung

Die Erfindung betrifft einen Freilaufkäfig aus polymerem Werkstoff, mit von Stegen und einem Stirnring begrenzten, einseitig axial offenen Taschen für Klemmrollen, an welche Stege blattförmige und auf die Klemmrollen wirkende Federelemente einstückig angeformt sind.

Ein derartiger Freilaufkäfig, der zwar für einen Klemmkörperfreilauf bestimmt ist, ist aus der DE-B-1 264 886 bekannt. Wird der bekannte Käfig in einer axial teilbaren Form ohne radial wirkende Schieber hergestellt, besteht eine Verbindung zwischen dem Federelement und der die zugehörige Tasche begrenzenden Stirnfläche des Stirnringes. Dies führt nachteiligerweise dazu, daß das Federelement über seine Breite nicht gleichmäßig federn kann, wodurch sich Schrägstellungen des Klemmkörpers bzw. der Klemmrolle und somit Funktionsstörungen des Freilaufs ergeben. Dieser Nachteil kann nur vermieden werden, wenn zur Herstellung des bekannten Käfigs eine komplizierte Form mit radial wirkenden Schiebern verwendet wird, die jeweils zwischen das Federelement und die die zugehörige Tasche begrenzende Stirnfläche des Stirnringes eingreifen und dort durch die Bildung eines Zwischenraums eine Verbindung zwischen beiden Teilen verhindern.

Der Erfindung liegt die Aufgabe zugrunde, einen Freilaufkäfig der oben angegebenen Art zu schaffen, bei dem eine Verbindung des Federelements mit der die zugehörige Tasche begrenzenden Stirnfläche des Stirnringes vermieden ist und der dennoch in einer axial teilbaren Form ohne radial wirkende Schieber hergestellt werden kann.

Diese Aufgabe wird dadurch gelöst, daß jeder Steg an seiner äußeren Mantelfläche ein Federelement aufweist, das sich im Zustand vor dem Einsetzen der Klemmrollen außerhalb der zugehörigen Tasche erstreckt und bei eingelegter Klemmrolle im wesentlichen radial nach innen umgebogen ist. Durch diese Anordnung des Federelementes und die Tatsache, daß es sich im Ausgangszustand außerhalb der zugehörigen Tasche befindet, wird eine Verbindung zwischen dem Federelement und der die Tasche begrenzenden Stirnfläche des Stirnringes vermieden. Dadurch wird erreicht, daß das Federelement über seine gesamte Breite gleichmäßig federn kann. Zugleich wird erreicht, daß der Käfig in einer axial teilbaren Form ohne radial wirkende Schieber hergestellt werden kann, da das sich außerhalb der zugehörigen Tasche erstreckende Federelement keine einer axialen Entformung des Käfigs entgegenstehende Hinterschneidung bildet.

Zur Variierung der Federkonstante kann sich das Federelement auch über nur einen Teilbereich der Steglänge erstrecken.

Um den vorhandenen Bauraum in radialer Richtung für eine möglichst große Steg-Querschnittsfläche besser ausnützen zu können, kann das Federelement von der Außenkante des Steges ausgehen, die der Tasche benachbart ist, in welcher das Federelement wirkt.

Nach einer weiteren Ausführungsform der Erfindung kann die Seitenfläche des Steges, die der Tasche zugewandt ist, in welcher das Federelement wirkt, in ihrem gesamten radial äußeren Bereich eine Ausnehmung aufweisen. Durch diese Maßnahme wird die Ansatzstelle des Federelementes um die Tiefe der Ausnehmung von der Tasche entfernt und somit eine größere Federlänge erzielt. Die radiale Erstreckung der Ausnehmung sollte hierbei so bemessen sein, daß das umgebogene Federelement nicht mit der Außenkante des durch die Ausnehmung gebildeten Absatzes des Steges in Berührung kommen kann.

Eine weitere Ausführungsform der Erfindung sieht vor, daß die an das Federelement angrenzende Seitenfläche des Steges in Federelementnähe mit einer sich in axialer Richtung erstreckenden Auskehlung versehen ist. Diese sollte sich dabei wenigstens über die gesamte Federelementbreite erstrecken, da sie der Aufgabe dient, das elastische Verformungsverhalten des Stegbereiches an der Ansatzstelle der Federelementes zu verbessern und eine möglichst mehr als rechtwinklige Umbiegung des Federelementes zu ermöglichen.

Nach einer letzten Variante der Erfindung weist das Federelement in seinem bei eingelegter Klemmrolle mit dieser in Kontakt stehenden Bereich eine axial verlaufende Ausnehmung auf, welche eine im wesentlichen kreisbogenförmige, dem Radius der Klemmrolle angepaßte Kontur besitzt. Diese Ausnehmung dient dazu, die Halterung der Klemmrolle in der Tasche zu verbessern.

In den Zeichnungen ist ein Ausführungsbeispiel der Erfindung dargestellt. Es zeigen:

Fig. 1 eine teilweise Stirnansicht eines erfindungsgemäßen Käfigs im Ausgangszustand,

Fig. 2 eine teilweise Aufsicht auf den Käfig nach Fig. 1 und

Fig. 3 eine teilweise Stirnansicht des Käfigs nach Fig. 1 mit eingesetzten Klemmrollen.

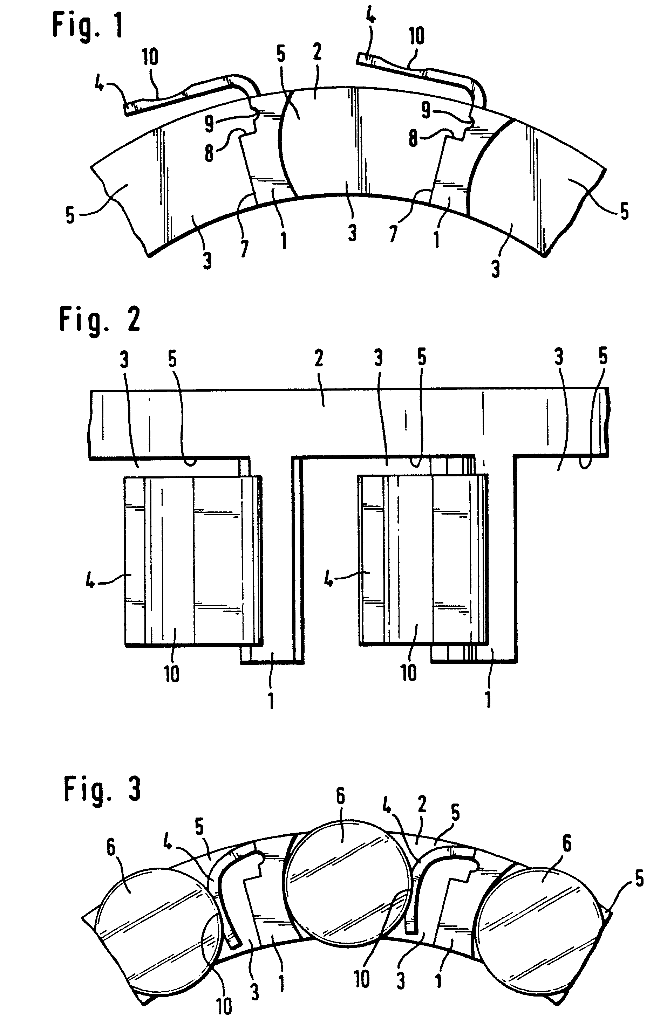

Bei dem in den Figuren 1 und 2 dargestellten Freilaufkäfig begrenzen die Stege 1 und der Stirnring 2 einseitig axial offene Taschen 3 zur Aufnahme der Klemmrollen. Jeder Steg 1 ist an seiner einen Außenkante mit wenigstens einem Federelement 4 versehen, das sich außerhalb der zugehörigen Tasche 3 erstreckt.

Durch diese Maßnahme weist der Käfig keinerlei Hinterschneidungen auf, die einer axialen Entformung entgegenstehen könnten. Der Käfig kann somit in einer axial teilbaren Spritzform ohne radial wirkende Schieber hergestellt werden.

Da sich, wie aus Figur 2 erkennbar ist, das Federelement 4 jeweils nur über einen Teil der Länge des Steges 1 erstreckt, besteht keine Verbindung des Federelementes 4 mit der die Tasche 3 begrenzenden Stirnfläche 5 des Stirnringes 2, wodurch das Federelement 4 über seine gesamte Breite gleichmäßig federn kann. Schrägstellungen der Klemmrollen können somit nicht auftreten.

Eine schädliche Verbindung zwischen dem Federelement 4 und der Stirnfläche 5 des Stirnringes 2 ist übrigens auch dann ausgeschlossen, wenn sich das Federelement 4 anders als in den Figuren dargestellt über die gesamte Länge des Steges 1 erstreckt, da infolge der Tatsache, daß sich das Federelement 4 außerhalb der Tasche 3 erstreckt, eine solche Verbindung überhaupt nicht zustande kommen kann.

Wie aus Figur 3 ersichtlich ist, wird das Federelement 4 im Zuge des Einlegens der Klemmrolle 6 in die Tasche 3 radial nach innen in diese hinein umgebogen.

Die Stegseitenfläche 7 weist in ihrem radial äußeren Bereich die Ausnehmung 8 auf und diese in ihrer an das Federelement 4 angrenzenden Fläche die Auskehlung 9. Die Ausnehmung 8 dient der Vergrößerung der erzielbaren Federlänge, die Auskehlung 9 verbessert das Biegeverhalten des Federelementes 4 an seiner Ansatzstelle.

Außerdem weist das Federelement 4 in seinem bei eingelegter Klemmrolle 6 wie aus Figur 2 ersichtlich mit dieser in Kontakt stehenden Bereich eine axial verlaufende Ausnehmung 10 auf, welche eine kreisbogenförmige, dem Radius der Klemmrolle 6 angepaßte Kontur besitzt und dazu dient, die Halterung der Klemmrolle 6 in der Tasche 3 zu verbessern.

## Patentansprüche

1. Freilaufkäfig aus polymerem Werkstoff, mit von Stegen (1) und einem Stirning (2) begrenzten, einseitig axial offenen Taschen (3) für Klemmrollen (6), an welche Stege blattförmige und auf die Klemmrollen wirkende Federelemente (4) einstückig angeformt sind, dadurch gekennzeichnet, daß jeder Steg (1) an seiner äußeren Mantelfläche ein Federelement (4) aufweist, das sich im Zustand vor dem Einsetzen der Klemmrollen außerhalb der zugehörigen Tasche (3) erstreckt und bei eingelegter Klemmrolle (6) im wesentlichen radial nach innen umgebogen ist, wobei eine Verbindung zwischen dem Federelement (4) und der die Tasche begrenzenden Stirnfläche des Stirnringes (2) vermieden wird, wodurch erreicht wird, daß das Federelement (4) über seine gesamte Breite gleichmäßig federn kann.

2. Freilaufkäfig nach Anspruch 1, dadurch gekennzeichnet, daß das Federelement (4) sich über einen Teilbereich der Steglänge erstreckt.

3. Freilaufkäfig nach Anspruch 1 oder 2, dadurch gekennzeichnet, daß das Federelement (4) von der Außenkante des Steges (1) ausgeht, die der Tasche (3) benachbart ist, in welcher das Federelement (4) wirkt.

4. Freilaufkäfig nach Anspruch 3, dadurch gekennzeichnet, daß die Seitenfläche (7) des Steges (1), die der Tasche (3) zugewandt ist, in welcher das Federelement (4) wirkt, in ihrem gesamten radial äußeren Bereich eine Ausnehmung (8) aufweist.

5. Freilaufkäfig nach Anspruch 3 oder 4, dadurch gekennzeichnet, daß die an das Federelement (4) angrenzende Seitenfläche des Steges (1) in Federelementnähe mit einer sich in axialer Richtung erstreckenden Auskehlung (9) versehen ist.

6. Freilaufkäfig nach einem der Ansprüche 1 bis 5, dadurch gekennzeichnet, daß das Federelement (4) in seinem bei eingelegter Klemmrolle (6) mit dieser in Kontakt stehenden Bereich eine axial verlaufende Ausnehmung (10) aufweist, welche eine kreisbogenförmige, dem Radius der Klemmrolle (6) angepaßte Kontur besitzt.

## Claims

1. Free-wheel cage made of polymeric material with pockets (3) for clamping rollers (6) defined by webs (1) and a frontal ring (2) and axially open on one side, on which webs (1) leaf spring elements (4) which act on the clamping rollers are integrally formed, characterised in that each web (1) has a spring element (4) on its outer peripheral face, which spring element 4 extends outside the corresponding pocket (3) in the state before the insertion of the clamping roller and is bent round substantially radially inwardly when the clamping roller (6) is inserted, whereby the formation of a connection between the spring element (4) and the end face of the frontal ring (2) defining the pocket (3) is avoided, thus assuring that the spring element (4) can spring uniformly across its full width.

2. Free-wheel cage according to claim 1, characterised in that the spring element (4) extends over a partial region of the web length.

3. Free-wheel cage according to claim 1 or 2, characterised in that the spring element (4) extends from the outer edge of the web (1) which is adjacent to the pocket (3) in which the spring element (4) acts.

4. Free-wheel cage according to claim 3, characterised in that the lateral face (7) of the web (1) facing the pocket (3) in which the spring element (4) acts has a recess (8) in its entire radially outer region.

5. Free-wheel cage according to claim 3 or 4, characterised in that an axially extending groove (9) is provided in the lateral face of the web (1) contiguous with the spring element (4) and near the spring element.

6. Free-wheel cage according to one of claims 1 to 5, characterised in that the spring element (4) has an axially running recess (10) in the region which is in contact with the clamping roller (6) when this is inserted, the recess (10) having a circular arc profile corresponding to the radius of the clamping roller (6).

## Revendications

1. Cage de roue libre en matière polymère ayant des poches (3) destinées à recevoir des galets de serrage (6), axialement ouvertes sur un côté et délimitées par des entretoises (1) et par une bague frontale (2), entretoises sur lesquelles des ressorts à lames agissant sur les galets de serrage sont formés d'une pièce, caractérisée en ce que chaque entretoise (1) est pourvue à sa surface d'enveloppe externe d'un ressort (4) qui s'étend en dehors de la poche correspondante (3) avant l'insertion du galet de serrage et qui est essentiellement recourbé radialement vers l'intérieur quand le galet de serrage (6) est inséré, de sorte que la formation d'une liaison entre le ressort (4) et la face frontale de la bague frontale (2) délimitant la poche (3) est évitée, ce qui permet une action uniforme du ressort (4) sur sa largeur entière.

2. Cage de roue libre selon la revendication 1, caractérisée en ce que le ressort (4) s'étend sur une partie de la longueur de l'entretoise (1).

3. Cage de roue libre selon la revendication 1 ou 2, caractérisée en ce que le ressort (4) est rattaché au bord extérieur de l'entretoise (1) avoisinant la poche (3) dans laquelle le ressort (4) agit.

4. Cage selon la revendication 3, caractérisée en ce que la face latérale (7) de l'entretoise (1) faisant face à la poche (3) dans laquelle agit le ressort (4), est pourvue d'un évidement (8) formé dans toute sa zone radialement externe.

5. Cage selon la revendication 3 ou 4, caractérisée en ce que la face latérale de l'entretoise (1) avoisinant le ressort (4) est pourvue près de celui-ci d'une gorge (9) s'étendant en direction axiale.

6. Cage de roue libre selon une des revendications 1 à 5, caractérisée en ce que le ressort (4) est pourvu dans sa partie qui est en contact avec le galet de serrage (6) quand celui-ci est inséré, d'un évidement (10) s'étendant en direction axiale et ayant un contour en forme d'arc de cercle correspondant au rayon du galet de serrage (6).

**Fig. 1**

**Fig. 2**

**Fig. 3**